# EUROPEAN PATENT APPLICATION

(11) **EP 2 662 911 A1**
(43) Date of publication of application: **13.11.2013**
(21) Application number: 11855088.8
(22) Date of filing: 22.12.2011
(51) Int. Cl.: H01M 2/10, H01M 2/20, H01M 2/34, H01M 10/44

(54) **CELL MODULE**

(30) Priority: 06.01.2011 JP 2011001004
(71) Applicant: Panasonic Corporation, Osaka 571-8501 (JP)
(72) Inventor: GESHI, Shinya, Osaka 540-6207 (JP); NAGAYAMA, Masatoshi, Osaka 540-6207 (JP); KISHII, Daisuke, Osaka 540-6207 (JP); TEMMYO, Hiroshi, Osaka 540-6207 (JP)
(74) Representative: Grünecker, Kinkeldey, Stockmair & Schwanhäusser
(86) International application number: PCT/JP2011/007228
(87) International publication number: WO 2012/093456

(57) **Abstract**

A battery module (100) includes: a plurality of cells (10) connected in parallel; and a holder (20) configured to house the cells (10). In each of the cells (10), an electrode group (4) including a positive electrode (1), a negative electrode (2), and a separator (3) is housed in a cell case (7). The cell case (7) is electrically connected to one of the positive electrode (1) or the negative electrode (2) to have a first electric potential. The holder (20) includes a plurality of housings (21) each housing an associated one of the cells (10), and has a second electric potential opposite to the first electric potential. The cells (10) are housed in the housings (21) with the cell cases (7) being insulated from the holder (20).

## Description

### TECHNICAL FIELD

The present disclosure relates to battery modules including a plurality of cells.

### BACKGROUND ART

In recent years, battery modules in each of which a plurality of batteries are housed in a case so as to output a predetermined voltage and have a predetermined capacity have been widely used as power sources for, for example, various equipment and vehicles. For these batteries modules, there is a newly employed technique of connecting general-purpose batteries in parallel or in series to form modules of battery assemblies each outputting a predetermined voltage and having a predetermined capacity and of variously combining such battery modules to comply with various applications. This module technique enables reduction in size and weight of battery modules by enhancing performance of batteries housed in the battery modules, and therefore, has advantages such as high flexibility in installing the battery modules in limited space of vehicles or the like (see, for example, Patent Document 1).

### CITATION LIST

### PATENT DOCUMENT

[Patent Document 1] Japanese Patent Publication No. H10-106521

### SUMMARY OF THE INVENTION

### TECHNICAL PROBLEM

However, with enhanced performance of batteries housed in battery modules, a short circuit occurring in one battery causes generation of heat and smoke, for example, in the battery and, when the influence of the generation of heat and smoke reaches other batteries in the same battery module, heat and smoke are generated in the entire battery module. The short circuit is considered to be caused in, for example, the following situation. A collision of a vehicle installed with a battery module or a fall of equipment installed with a battery module causes a sharp conductive material such as a nail or a conductive member constituting the battery module is pressed by the battery (where this situation will be hereinafter referred to as an external factor), thereby electrically connecting a positive electrode and a negative electrode to each other in the battery.

It is therefore an object of the present disclosure to provide a battery module with enhanced safety.

### SOLUTION TO THE PROBLEM

To achieve the object, a battery module according to the present disclosure has a configuration in which a holder for housing cells has an electric potential opposite to that of cell cases of the cells.

Specifically, a battery module according to the present disclosure is a battery module including: a plurality of batteries (where batteries used for the battery module will be hereinafter referred to as "cells") connected in parallel; and a holder configured to house the cells, wherein in each of the cells, an electrode group including a positive electrode, a negative electrode, and a separator is housed in a cell case, the cell case is electrically connected to one of the positive electrode or the negative electrode to have a first electric potential, the holder includes a plurality of housings each housing an associated one of the cells, and has a second electric potential opposite to the first electric potential, and the cells are housed in the housings with the cell cases being insulated from the holder.

In this battery module, the cell case has a first electric potential, and the holder has a second electric potential opposite to the first electric potential. Accordingly, even when an internal short circuit occurs in a cell housed in the holder due to an external factor, an external short circuit occurs between the holder outside the cell and the surface of the cell, thereby causing charge current in the cell to be discharged outside the cell. Consequently, a short circuit current in the cell can be reduced, resulting in that heat generation is reduced and smoke or the like is hardly generated. In this manner, the safety can be enhanced.

### ADVANTAGES OF THE INVENTION

In a battery module according to the present disclosure, even at an occurrence of a short circuit in a cell due to an external factor, generation of heat and smoke hardly occurs in the cell, thereby enhancing the safety.

### BRIEF DESCRIPTION OF THE DRAWINGS

[FIG. 1] FIG. 1 is a cross-sectional view schematically illustrating a configuration of a cell of a battery module according to an embodiment of the present disclosure.
[FIG. 2] FIG. 2 is a cross-sectional view schematically illustrating a configuration of a battery module of the embodiment.
[FIG. 3] FIG. 3 is a perspective view illustrating a configuration of a holder of the battery module of the embodiment.
[FIG. 4] FIG. 4 is a partial cross-sectional view illustrating an example of a method for connecting the holder and a positive electrode current collector plate in the battery module of the embodiment.
[FIG. 5] FIG. 5 is a partial cross-sectional view illustrating a state in which a sharp conductive material such as a nail penetrates the battery module of the embodiment.
[FIG. 6] FIG. 6(a) is a cross-sectional view illustrating a state in which a sharp conductive material such as a nail penetrates a battery module in which a holder does not have an electric potential opposite to that of a cell case. FIG. 6(b) is a graph showing the value of a short circuit current or a voltage of a cell in the state illustrated in FIG. 6(a).
[FIG. 7] FIG. 7(a) is a cross-sectional view illustrating a state in which a sharp conductive material such as a nail penetrates the battery module of the embodiment. FIG. 7(b) is a graph showing the value of a short circuit current or a voltage of a cell in the state illustrated in FIG. 7(a).
[FIG. 8] FIG. 8 is a partial cross-sectional view illustrating a configuration in which a current limiter is provided between a negative electrode terminal and a negative electrode current collector plate in the battery module of the embodiment.

### DESCRIPTION OF EMBODIMENTS

An embodiment of the present disclosure will be described in detail hereinafter with reference to the drawings. The present disclosure is not limited to the following embodiment. Various changes and modifications may be made without departing from the scope of the invention.

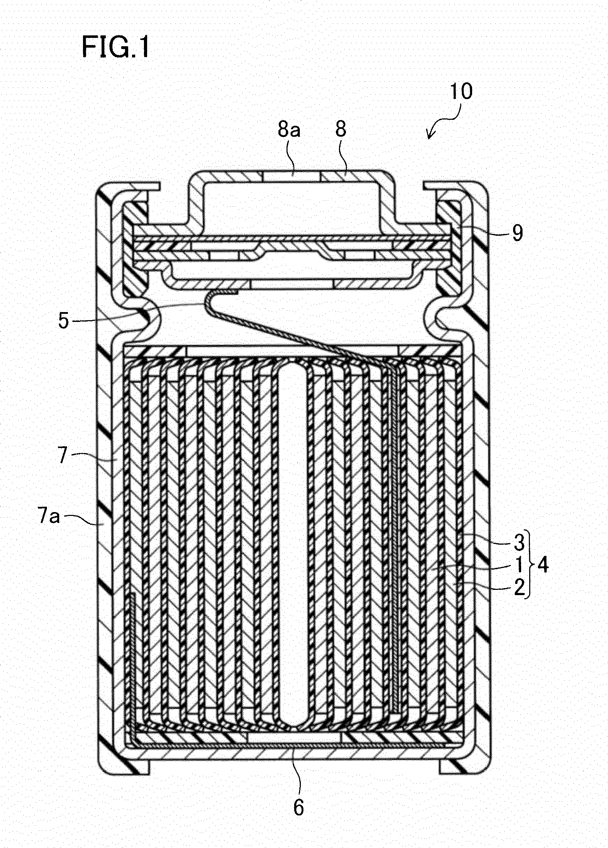

First, a cell for use in a battery module according to this embodiment will be described with reference to FIG. 1. FIG. 1 is a cross-sectional view schematically illustrating a configuration of a cell of a battery module according to this embodiment.

As illustrated in FIG. 1, a cell 10 for use in the battery module of this embodiment includes a positive electrode sheet 1 containing an active material, a negative electrode sheet 2 containing an active material, a separator 3, an electrode group 4 formed by winding the positive electrode sheet 1 and the negative electrode sheet 2 with the separator 3 interposed therebetween, and a cell case 7 housing the electrode group 4 and an nonaqueous electrolyte and made of a metal. An opening is formed on top of the cell case 7, and is sealed with a sealing plate 8 with a gasket 9 interposed therebetween. The positive electrode sheet 1 is connected to the sealing plate 8, also serving as a positive electrode terminal, through a positive electrode lead 5. The negative electrode sheet 2 is connected to the bottom of the cell case 7, also serving as a negative electrode terminal, through a negative electrode lead 6. Specifically, the cell case 7 has a negative electric potential (a first electric potential). The sealing plate 8 has a vent 8a through which gas generated in the cell 10 because of an internal short circuit or the like is ejected to outside the cell 10. An outer periphery of the cell 10 is constituted by the cell case 7, but may be made of any material capable of having a positive electric potential or a negative electric potential and serving as an outer shell of the cell 10. The outer periphery of the cell case 7 is wrapped with an insulating resin film 7a which contracts when heated.

In this embodiment, the type of the cell 10 is not specifically limited, and may be a secondary battery such as a lithium ion battery or a nickel-metal hydride battery. The cell 10 is not limited to a cylindrical battery, and may have a square shape, for example.

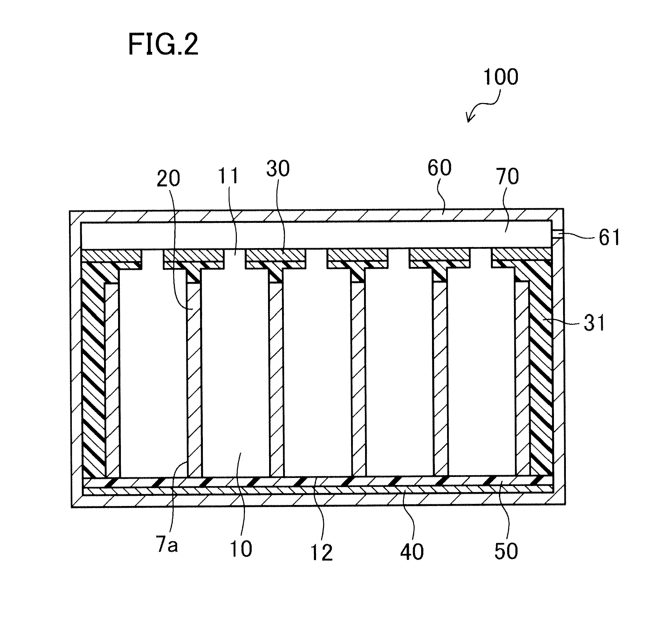

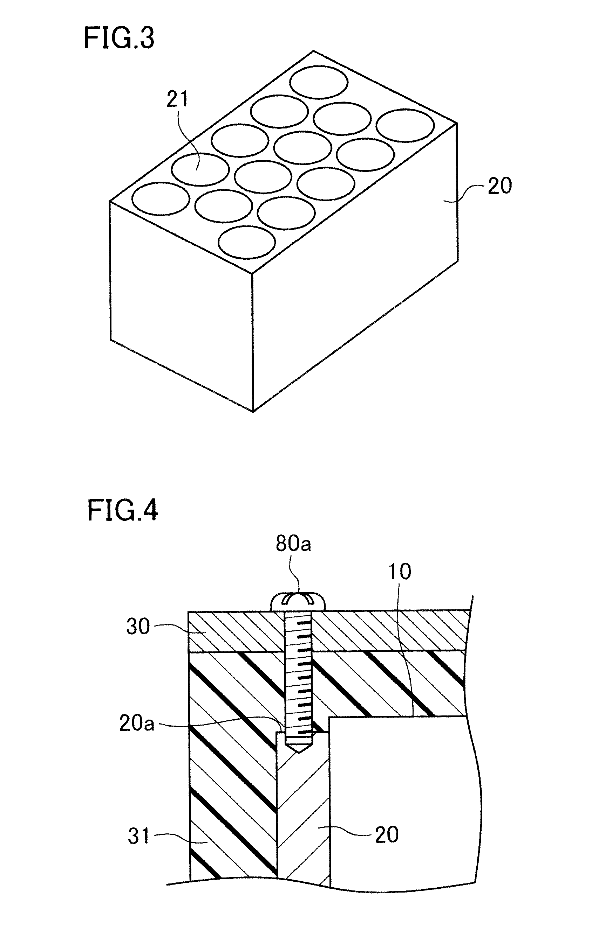

Referring now to FIGS. 2 and 3, the battery module of this embodiment will be described. FIG. 2 is a cross-sectional view schematically illustrating a configuration of the battery module of this embodiment. FIG. 3 is a perspective view illustrating a configuration of a holder of the battery module of this embodiment.

As illustrated in FIG. 2, in a battery module 100 according to this embodiment, a plurality of cells 10 are housed in a case 60 with their polarities oriented in the same direction. The cells 10 are housed in a holder 20 as illustrated in FIG. 3. Each of the cells 10 is housed in an associated one of housings 21 formed in the holder 20. The holder 20 is insulated from the side surfaces of the cell cases 7 by the resin films 7a. The method for insulating the holder 20 from the cell cases 7 is not limited to the method in which the cell cases 7 are wrapped with the resin films 7a, and may be a method in which an insulating member is disposed between the holder 20 and the cell cases 7.

The holder 20 is preferably made of a thermally conductive material such as aluminium. Then, heat generated in the cells 10 can be quickly dissipated toward the holder 20, thereby effectively reducing a temperature rise of the cells 10.

In each of the cells 10, a positive electrode current collector plate (a second current collector plate) 30 for electrically connecting a positive electrode terminal 11 (a second electrode terminal) having a positive electric potential (a second electric potential) is provided at the positive electrode terminal 11, and a negative electrode current collector plate (a first current collector plate) 40 for electrically connecting a negative electrode terminal 12 (a first electrode terminal) having a negative electric potential (a first electric potential) is provided at the negative electrode terminal 12. The positive electrode current collector plate 30 is closely in contact with the cell 10 with a positive electrode holder 31 of, e.g., resin sandwiched therebetween. A flat-plate spacer 50 made of an elastic member is provided between the holder 20 and the negative electrode current collector plate 40. The positive electrode current collector plate 30 is provided with an external terminal (not shown) of one electrode (i.e., the positive electrode in this case) of the battery module 100. The negative electrode current collector plate 40 is provided with an external terminal (not shown) of the other electrode (i.e., the negative electrode in this case).

In a configuration in which the cells 10 are arranged with their polarities oriented in the same direction as described in this embodiment, the positive electrode current collector plate 30 is a positive electrode bus bar made of a conductive flat plate, thereby easily achieving parallel connection. Likewise, the negative electrode current collector plate 40 is a negative electrode bus bar made of a conductive flat plate, thereby easily achieving parallel connection. Each of the positive electrode current collector plate 30 and the negative electrode current collector plate 40 may be a circuit board having a wiring pattern which electrically connects the cells 10.

The case 60 has an exhaust chamber 70 as an internal space between the positive electrode current collector plate 30 and the case 60. The case 60 also has an outlet 61 through which the exhaust chamber 70 communicates with the outside. In this configuration, each of the positive electrode current collector plate 30 has a through hole in which the positive electrode terminal 11 of an associated one of the cells 10 is inserted so that the vent 8a communicates with the exhaust chamber 70. Then, gas from the cells 10 is released to outside the case 60 from the outlet 61through the exhaust chamber 70.

Next, a method for connecting the holder 20 and the positive electrode current collector plate 30 will be described with reference to FIG. 4. FIG. 4 is a partial cross-sectional view illustrating an example of a method for connecting the holder and the positive electrode current collector plate in the battery module of the embodiment.

As illustrated in FIG. 4, an end 20a of the holder and the positive electrode current collector plate 30 have screw holes (or bolt holes), and a screw 80a as a connection member made of a conductive material is provided to penetrate these screw holes. In this manner, the holder 20 is electrically connected to the positive electrode current collector plate 30 through the screw 80a to have a positive electric potential. The method for connecting the holder 20 and the positive electrode current collector plate 30 is not limited to this example, and may be any method capable of electrically connecting the holder 20 and the positive electrode current collector plate 30 to each other.

On the other hand, the flat-plate spacer 50 of an elastic member is provided between the holder 20 and the negative electrode current collector plate 40 as described above, resulting in that the holder 20 and the negative electrode current collector plate 40 are insulated from each other.

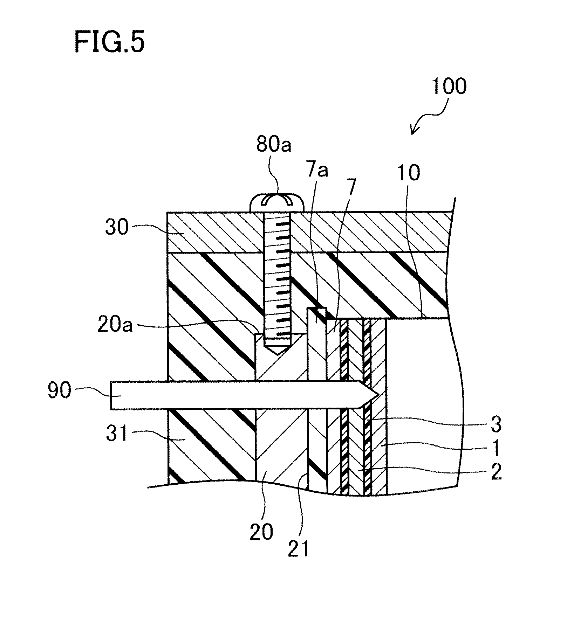

Now, advantages of the foregoing configuration will be described with reference to FIG. 5. FIG. 5 is a partial cross-sectional view illustrating a state in which a sharp conductive material such as a nail penetrates the battery module of the embodiment.

As illustrated in FIG. 5, when a sharp conductive material 90 such a nail penetrates the battery module 100 of this embodiment, specifically when the conductive material 90 penetrates the holder 20 and then penetrates a cell 10 (hereinafter referred to as a short circuit cell 10a) adjacent to a portion of the holder 20 penetrated by the conductive material 90, an internal short circuit occurs between the positive electrode sheet 1 and the negative electrode sheet 2, and a short circuit (an external short circuit) occurs between the holder 20 having a positive electric potential and the cell case 7 of the short circuit cell 10a having a negative electric potential. This external short circuit causes charge current in the cells 10 to be dominantly discharged to outside the cells 10, resulting in that heat generation due to the internal short circuit in the short circuit cell 10a hardly occurs and problems such as generation of smoke does not occur.

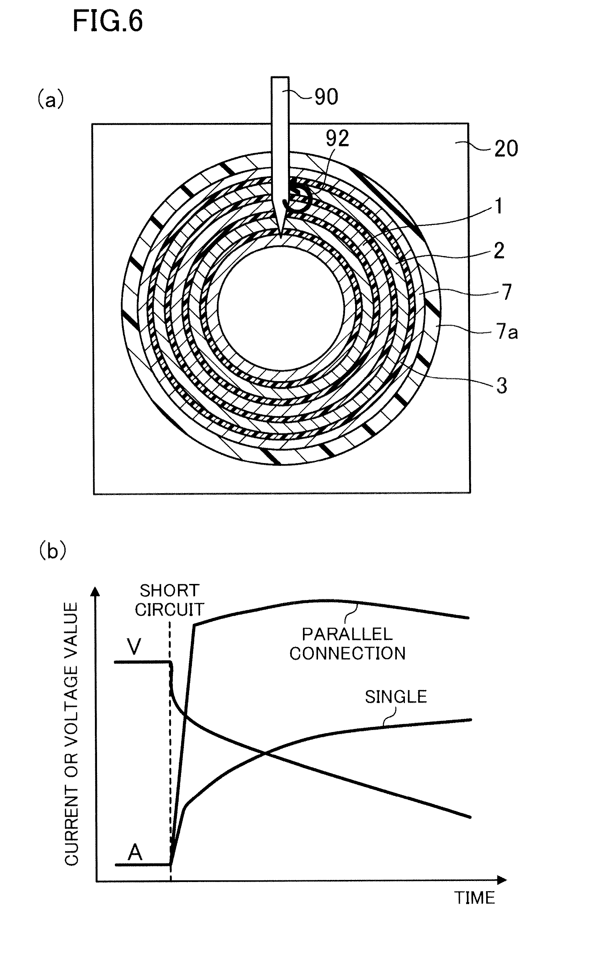

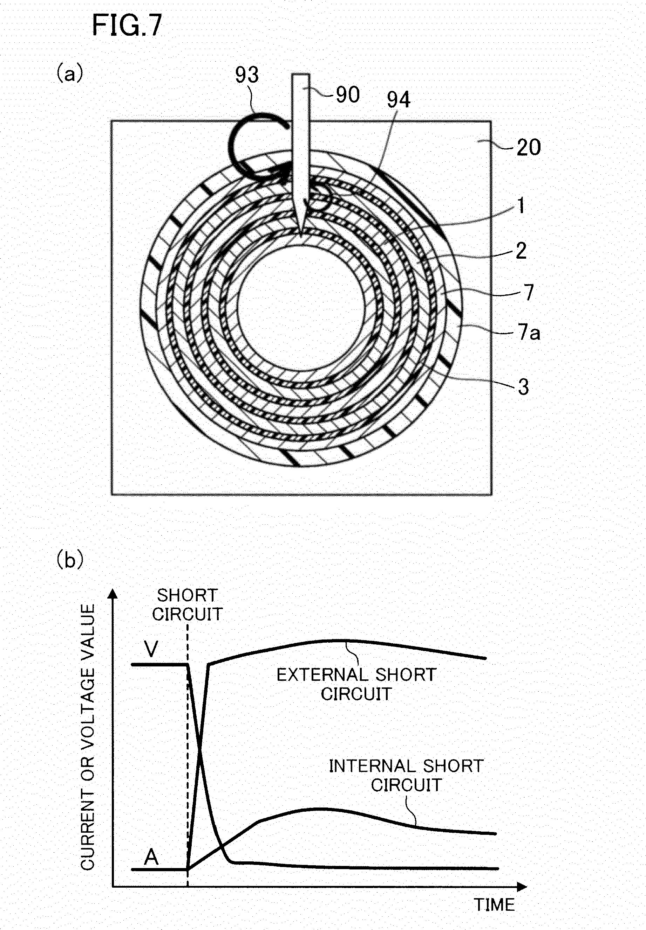

Advantages of the above external short circuit will be more specifically described with reference to FIGS. 6 and 7. FIG. 6(a) is a cross-sectional view illustrating a state in which a sharp conductive material such as a nail penetrates a battery module in which a holder does not have an electric potential opposite to that of a cell case. FIG. 6(b) is a graph showing the value of a short circuit current or a voltage of a cell in the state illustrated in FIG. 6(a). FIG. 7(a) is a cross-sectional view illustrating a state in which a sharp conductive material such as a nail penetrates the battery module of this embodiment. FIG. 7(b) is a graph showing the value of a short circuit current or a voltage of a cell in the state illustrated in FIG. 7(a). As described above, although the positive electrode sheet 1 and the negative electrode sheet 2 are wound with the separator 3 interposed therebetween in each of the cells 10, the positive electrode sheet 1, the negative electrode sheet 2, and the separator 3 are illustrated as ring shapes in FIGS. 6(a) and 7(a) for simplicity.

As illustrated in FIGS. 6(a) and 6(b), when a nail, for example, penetrates a single battery, an internal short circuit occurs between the positive electrode sheet 1 and the negative electrode sheet 2. On the other hand, when a nail, for example, penetrates a battery module in which a plurality of cells are connected in parallel, an internal short circuit 92 occurs in a short circuit cell 10a penetrated by, e.g., the nail, and current from the other normal cells 10 (hereinafter referred to as other cells 10b) does not flow toward the external terminal connected to an external device, and flows into the short circuit cell 10a having a lower resistance. Accordingly, the amount of current flowing into the short circuit cell 10a increases, resulting in an enhanced possibility of, for example, generation of heat and smoke.

On the other hand, in this embodiment, as illustrated in FIGS. 7(a) and 7(b), the holder 20 has an electric potential opposite to that of the cell case 7 of each of the cells 10. Thus, a short circuit occurs outside the cells 10 (i.e., an external short circuit 93 occurs). In addition, since each of the holder 20 and the cell cases 7 is made of a metal, the specific resistances of the holder 20 and the cell cases 7 are smaller than those of the positive electrode sheet 1 and the negative electrode sheet 2 containing active materials. As a result, current collectively flows into the holder 20 outside the cells 10 having a smaller resistance, i.e., current more dominantly flows toward the external short circuit 93 than the internal short circuit 94, thereby reducing heat generation inside the cells 10.

In this embodiment, the holder 20, which is a necessary constituent of the battery module, has an electric potential opposite to that of the cell cases 7 of the cells 10. Thus, charge current in the cells 10 can be dominantly discharged to outside the cells 10 without providing an additional member. In addition, the use of the holder 20 made of a thermally conductive metal such as an aluminium block can enhance heat dissipation, thereby reducing the possibility of generation of smoke and combustion of the cells.

As described above, since the holder 20 has an electric potential opposite to that of the side surfaces of the cell cases 7, the safety of the battery module 100 can be enhanced.

In the foregoing description of this embodiment, the cell cases 7 of the cells 10 have a negative electric potential. Alternatively, the cell cases 7 may have a positive electric potential. In this case, by providing the holder 20 with a negative electric potential, advantages similar to those described above can be achieved. A method for providing the holder 20 with a negative electric potential may be a method of electrically connecting the negative electrode current collector plate 40 and the holder 20 to each other with a conductive screw or the like in the same manner described with reference to FIG. 4. However, the present disclosure is not limited to this method.

In the battery module 100 of this embodiment, the cells 10 are connected in parallel. Thus, when the conductive material 90 penetrates one of the cells 10 so that a short circuit occurs between the holder 20 and the short circuit cell 10a as described above, an external short circuit occurs in the other cells 10b. Specifically, current from the other cells 10b collected in the positive electrode current collector plate 30 is not output from the external terminal (not shown) at the positive electrode of the battery module 100, but flows in the generated short circuit. That is, current from the other cells 10b returns to the cells 10 where the current originally flow, by way of the positive electrode current collector plate 30, the holder 20, the conductive material 90, the cell case 7 of the short circuit cell 10a, and the negative electrode current collector plate 40. In this manner, if the battery module 100 is left while being penetrated by the conductive material 90, no current is output from the external terminal at the positive electrode of the battery module 100 although the other cells 10b themselves are in normal conditions. Accordingly, the battery module 100 loses its function, and it becomes difficult to use a vehicle or equipment installed with the battery module 100.

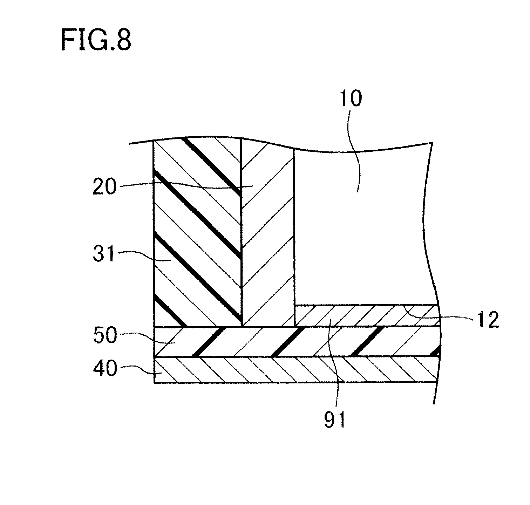

A battery module having a configuration for solving such problems will be described with reference to FIG. 8. FIG. 8 is a partial cross-sectional view illustrating a configuration in which a current limiter is provided between the negative electrode terminal and the negative electrode current collector plate in the battery module of this embodiment.

As illustrated in FIG. 8, the battery module of this embodiment includes a current limiter 91 configured to electrically limit a short circuit so that when the conductive material 90 penetrates one of the cells 10, current from the other cells 10 does not flow into a short circuit occurring among the holder 20, the conductive material 90, and the short circuit cell 10a. For example, the current limiter 91 is provided between the negative electrode terminals 12 of the cells 10 housed in the holder 20 and the negative electrode current collector plate 40. In this manner, when current collected in the positive electrode current collector plate 30 (i.e., current having a predetermined value of more) flows into the short circuit, electrical conduction between the negative electrode terminal 12 of the short circuit cell 10a and the negative electrode current collector plate 40 is blocked, resulting in that current from the other cells 10 does not flow into the short circuit and is normally output from the external terminal at the positive electrode.

In the manner described above, even if the conductive material 90 penetrates the cell 10 to cause a short circuit, current from the other cells 10b collected in the positive electrode current collector plate 30 temporarily flows in this short circuit, but a flow of current with a predetermined value or more causes the current limiter 91 to limit or block electrical conduction, resulting in that current from the other cells 10b collected in the positive electrode current collector plate 30 is output again from the external terminal at the positive electrode. Accordingly, even when the conductive material 90 penetrates the cell 10, the battery module 100 maintains its normal function, and a vehicle or equipment installed with the battery module 100 can be used. The current limiter 91 may be a rectifier such as a diode or a fuse, for example. The current limiter 91 only needs to be placed at a position where the current limiter 91 can limit or block electrical connection between the negative electrode terminal 12 and the negative electrode current collector plate 40, and may be placed in the negative electrode current collector plate 40 or the cells 10. In this embodiment, the current limiter 91 is located at the negative electrode, but may be located at the positive electrode. Specifically, the current limiter 91 may be placed at a position where the current limiter 91 can block electrical connection between the positive electrode terminal 11 and the positive electrode current collector plate 30. Even in this case, a flow of current with a predetermined value or more causes the current limiter 91 to block electrical conduction, and thereby, current from the other cells 10b collected in the positive electrode current collector plate 30 is output again from the external terminal at the positive electrode.

The present disclosure has been described based on the foregoing preferred embodiment. This embodiment do not limit the present disclosure, and may be variously changed or modified. For example, the holder 20 may electrically connect the positive electrode terminals 11 or the negative electrode terminals 12 together without providing the positive electrode current collector plate 30 or the negative electrode current collector plate 40. Specifically, the holder 20 may electrically connect the positive electrode terminals 11 of the cells 10 together. Then, the holder is provided with a positive electric potential without providing a connection member such as the screw 80a.

### INDUSTRIAL APPLICABILITY

A battery module according to the present disclosure can have enhanced safety, and is useful for power sources for driving vehicles such as automobiles and electric motorcycles, mobile electronic equipment, and mobile communication equipment.

### DESCRIPTION OF REFERENCE CHARACTERS

- 1: positive electrode (sheet)
- 2: negative electrode (sheet)
- 3: separator
- 4: electrode group
- 5: positive electrode lead
- 6: negative electrode lead
- 7: cell case
- 7a: resin film
- 8: sealing plate
- 8a: vent
- 9: gasket
- 10: cell
- 10a: short circuit cell
- 10b: other cells
- 11: positive electrode terminal (second electrode terminal)
- 12: negative electrode terminal (first electrode terminal)
- 20: holder
- 20a: end of holder
- 21: housing
- 30: positive electrode current collector plate (second current collector plate)
- 31: positive electrode holder
- .40: negative electrode current collector plate (first current collector plate)
- 50: spacer
- 60: case
- 61: outlet
- 70: exhaust chamber
- 80a: screw
- 90: conductive material
- 91: current limiter
- 92: internal short circuit
- 93: external short circuit
- 94: internal short circuit
- 100: battery module

## Claims

1. A battery module, comprising:
a plurality of cells connected in parallel; and
a holder configured to house the cells, wherein
in each of the cells, an electrode group including a positive electrode, a negative electrode, and a separator is housed in a cell case,
the cell case is electrically connected to one of the positive electrode or the negative electrode to have a first electric potential,
the holder includes a plurality of housings each housing an associated one of the cells, and has a second electric potential opposite to the first electric potential, and
the cells are housed in the housings with the cell cases being insulated from the holder.

2. The battery module of claim 1, further comprising:
a first current collector plate configured to electrically connect first electrode terminals of the cells having the first electric potential together; and
a second current collector plate configured to electrically connect second electrode terminals of the cells having the second electric potential together, wherein
the holder is electrically connected to the second current collector plate.

3. The battery module of claim 2, wherein
the holder is connected to the second current collector plate through a connection member of a conductive material.

4. The battery module of any one of claims 1-3, further comprising:
a current limiter configured to limit current when a current with a predetermined value or more flows at least one of between the first current collector plate and the first electrode terminal or between the second current collector plate and the second electrode terminal in each of the cells.

5. The battery module of any one of claims 1-4, wherein
the cell case has a negative electric potential, and
the holder has a positive electric potential.
